# EUROPÄISCHE PATENTANMELDUNG

(11) **EP 1 244 027 A1**
(43) Veröffentlichungstag der Anmeldung: **25.09.2002**
(21) Anmeldenummer: 01107285.7
(22) Anmeldetag: 23.03.2001
(51) Int. Cl.: G06F 17/30

(54) **Methode zur Einordnung eines Dokuments in einen Dokumentenbestand**

(71) Anmelder: Siemens Business Services GmbH & Co. OHG, 81739 München (DE)
(72) Erfinder: Höfer, Hardy, 33102 Paderborn (DE)
(74) Vertreter: Berg, Peter

(57) **Zusammenfassung**

Methode zum Einordnen eines neuen Dokuments in einen bestehenden Datenbestand, der durch Ordnungskriterien strukturiert ist, wobei zu dem neuen Dokument dasjenige nächstliegende Dokument bestimmt wird, das zu dem neuen Dokument bezüglich eines vorgegebenen Abstandsmaßes einen minimalen Abstand hat, und die Ordnungskriterien des neuen Dokuments aus den Ordnungskriterien des nächstliegenden Dokuments abgeleitet werden.

## Beschreibung

Die Erfindung betrifft die Einordnung eines Dokuments in einen Dokumentenbestand.

Größere Dokumentenbestände werden in der Regel in Datenverarbeitungsanlagen verwaltet. Wesentlich sind dabei Suchfunktionen, die es erlauben, Dokumente an Hand von inhaltlichen Kriterien aufzufinden.

Eine erste Methode besteht darin, den Dokumenten Schlag- und Stichwörter zuzuordnen. Mittels boolescher Suchausdrücke können dann über diese Schlüsselwörter Dokumente gefunden werden. Für gute Suchresultate sind daher passend vergebene Schlüsselwörter von großer Bedeutung. Bei weiter Auslegung des Begriffs kann man durchaus davon sprechen, daß hierdurch der Bestand durch Ordnungskriterien strukturiert ist.

Eine zweite Methode besteht darin, die Dokumente in einen hierarchischen Baum einzuordnen. In einer Bibliothek wird in der Regel eine Signatur verwendet, die einen solchen Baum darstellt. Die Systematik dieser Signatur ist jedoch dem gelegentlichen Benutzer nur schwer eingängig. In anderen Dokumenten-Verwaltungssystemen wird ein solcher Baum von Dokumenten manuell aufgebaut; hierbei erhält jeder Knoten eine längere Beschreibung. Eine Navigation ist über ein Computerprogramm möglich. In beiden Fällen handelt es sich darum, daß der Dokumentenbestand im engeren Sinne durch Ordnungskriterien strukturiert ist.

In allen Fällen ist es von entscheidender Bedeutung, daß die 'richtigen' Such- und Stichwörter vergeben oder das Dokument an die 'richtige' Stelle im Baum der Dokumente eingeordnet wird. Aufgabe der Erfindung ist es also, eine Methode anzugeben, mit der schnell und einfach für ein neues Dokument Such- und Stichwörter bzw. eine Stelle im Dokumentenbaum gefunden werden können.

Die Erfindung benutzt ein System, in dem ein neues Dokument dem System bekannt gemacht wird, d.h. der Text in codierter Form an das System übermittelt wird. Daraufhin werden die zu dem Dokument ähnlichen Dokumente ermittelt. Hierfür hat es sich bewährt, den Abstand des neuen Dokuments zu allen bisherigen Dokumenten zu bestimmen. Als Abstandmaß wird bevorzugt das 'Cosinus-Maß' in dem Vektorraum-Modell verwendet. Dieses ist z.B. in "Introduction to Modern Information Retrieval" von Gerald Salton, McGraw Hill 1983, S.121-122, beschrieben. Eine Übersicht hierüber findet sich auch in der Diplomarbeit "Visualisierung latent semantischer Hypertext-Strukturen" von Hardy Höfer, Univ. Paderborn, Dezember 1999, im Kapitel 4.3.

Nach dem Vergleich des neuen Dokuments mit dem bisherigen Dokumentenbestand über das genannte Abstandsmaß können nun die schon vorhandenen Dokumente angezeigt werden, die dem neuen Dokument am nächsten kommen, indem die Dokumente mit dem geringsten Abstand in der Reihenfolge des Abstands angezeigt werden.

In überraschend einfacher Weise ergibt sich daraus eine Lösung für die Einordnung eines neuen Dokuments. Der Benutzer wird aufgefordert, von den gefundenen Dokumenten ausgehend, nunmehr die richtige Position im Baum anzugeben, um das Dokument dort dann permanent zu archivieren.
Selbstverständlich kann auf die aktive Korrekturmöglichkeit des Benutzers verzichet werden und das neue Dokument parallel zu dem nächstliegenden Dokument eingeordnet werden.
In einer Weiterbildung werden bei einer automatischen Einordnung noch zusätzliche heuristische Prüfungen angewendet.

Zum einen sollten die beide nächstliegenden Dokumente im Dokumentenbaum einen geringen Abstand haben. Der Abstand kann beispielsweise die Anzahl der Kanten sein, die minimal verwendet werden müssen, um im Dokumentenbaum von einem zum anderen Dokument zu gelangen.
Ferner kann ermittelt werden, ob zu dem Dokument mit dem geringsten Abstand weitere Dokumente derselben Kategorie vorhanden sind und ob eines dieser Dokumente in der Liste der ähnlichen sehr weit vorne steht. Beispielsweise könnte verlangt sein, daß, wenn mindestens vier Dokumente in der gefundenden Kategorie sind, eines dieser vier unter den ersten vier der ähnlichsten Dokumente sein muß. Diese und ähnliche Randbedingungen sind spezifisch zu dem jeweiligen Datenbestand heuristisch zu ermitteln.

Unabhängig von der Einordnung in einen Dokumentenbaum kann die Erfindung auch dazu dienen, die Vergabe von Schlag- und Stichworten zu verbessern. Einerseits kann bereits bei der Analyse des neuen Dokuments eine automatische Vergabe von Schlag- und Stichworten erfolgen. Diese werden dann im nächsten Schritt dem Benutzer als Vorschlag angeboten bzw. im System mit der Markierung 'automatisch ermittelt' abgelegt. Es hat sich jedoch gezeigt, daß diese nur aus dem Dokument selbst automatisch ermittelten Schlagwörter zwar auf das Dokument zutreffen, aber nicht immer eine gezieltes Finden erlauben. Insbesondere wenn die Terminologie mit anderen, ggf. synonymen, Begriffen arbeitet, sind die Schlagworte unterschiedlich. Synonymwörterbücher sind dabei zwar zweckmäßig, aber bei neuen Fachgebieten mit noch nicht etablierter Terminologie weniger wirksam.

Die Erfindung verwendet daher die Schlagwörter aus dem oder den nächstliegenden Dokumenten. Nachdem, wie oben beschrieben, das nächstliegende Dokument gefunden und, in bevorzugter Ausprägung, auch angezeigt wurde, werden auch die dort verwendeten Such- und Stichwörter angezeigt und insbesondere als Such- und Stichwörter für das neue Dokument vorgeschlagen.

Der Benutzer kann dann die Liste noch modifizieren, d.h. einzelne als irrelevant streichen.

Eine Variante verwendet alle Such- und Stichwörter, die in dem neuen Dokument per Automatik gefunden wurden und die aus den beispielsweise vier am nächsten liegenden Dokumenten gefunden wurden. Diese Such- und Stichwörter erhalten dann die Anzahl des Vorkommens, hier eine Zahl zwischen eins und fünf, als Gewicht, das auch in der Datenbank mit abgespeichert wird. Anstelle einer festen Schranke von vier ist es auch möglich, solange die Such- und Stichwörter weiterer Dokumente in der Reihenfolge ihres Abstand zu berücksichtigen, bis die Reihenfolge der Such- und Stichwörter auf der mit der Anzahl bewerteten Liste sich nicht mehr ändert, nachdem eine vorgegebene Anzahl von weiteren Dokumenten berücksichtigt wurde.

## Patentansprüche

1. Methode zum Einordnen eines neuen Dokuments in einen bestehenden Datenbestand, der durch Ordnungskriterien strukturiert ist,
**dadurch gekennzeichnet,**
**daß** zu dem neuen Dokument dasjenige nächstliegende Dokument bestimmt wird, das zu dem neuen Dokument bezüglich eines vorgegebenen Abstandsmaßes einen gemäß einer vorgegebenen Auswahlfunktion minimalen Abstand hat,
und die Ordnungskriterien des neuen Dokuments aus den Ordnungskriterien des nächstliegenden Dokuments abgeleitet werden.

2. Methode nach Anspruch 1, wobei die Ordnungskriterien eine Baumstruktur darstellen.

3. Methode nach Anspruch 1 oder 2, wobei die Ordnungskriterien Such- und Stichwörter sind.

4. Methode nach einem der vorherigen Ansprüche, wobei die Auswahlfunktion das Minimum ist.

5. Methode nach einem der vorherigen Ansprüche, wobei die Auswahlfunktion die Ordnungkriterien der zugehörigen Dokumente berücksichtigt.

6. Methode nach Anspruch 5, wobei die Auswahlfunktion nur solche Dokumente berücksichtigt, bei denen mindestens paarweise gleiche Ordungskriterien vorhanden sind.

7. Methode nach Anspruch 6, wobei die Auswahlfunktion ausgehend von einem ersten nächstliegenden Dokument das nächste nächstliegende Dokument mit gleichen Ordnungskriterien sucht und nur dann berücksichtigt, wenn der Gesamtanzahl der Dokumente mit diesem Ordnungskriterium größer als die Position des nächsten nächstliegendene Dokuments in der Auswahlliste ist.
